(19) Europäisches Patentamt / European Patent Office / Office européen des brevets

(11) **EP 2 529 941 B1**

## (12) EUROPEAN PATENT SPECIFICATION

(45) Date of publication and mention
of the grant of the patent:
**19.08.2015 Bulletin 2015/34**

(21) Application number: **11737123.7**

(22) Date of filing: **27.01.2011**

(51) Int Cl.:
**B41M 5/52** *(2006.01)*          **C09D 11/326** *(2014.01)*

(86) International application number:
**PCT/JP2011/051669**

(87) International publication number:
**WO 2011/093412 (04.08.2011 Gazette 2011/31)**

(54) **COATING MATERIAL FOR FORMING INK-JET-INK-RECEIVING LAYER, RECORDING MEDIUM OBTAINED WITH SAME, AND PRINTED MATTER**

BESCHICHTUNGSMATERIAL ZUR BILDUNG EINER TINTENSTRAHLTINTENAUFNAHMESCHICHT, DARAUS GEWONNENES AUFZEICHNUNGSMEDIUM UND BEDRUCKTES MATERIAL

PRODUIT DE REVÊTEMENT POUR FORMER COUCHE DE RÉCEPTION D'ENCRE POUR JET D'ENCRE, MILIEU D'ENREGISTREMENT OBTENU AVEC CE PRODUIT ET MATÉRIAU IMPRIMÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2010 JP 2010015176**

(43) Date of publication of application:
**05.12.2012 Bulletin 2012/49**

(73) Proprietors:
• **Toyo Ink SC Holdings Co., Ltd.**
  **Tokyo 104-8377 (JP)**
• **Toyo Ink Co., Ltd.**
  **Tokyo 104-8378 (JP)**

(72) Inventors:
• **SONETA, Yuji**
  **Tokyo 104-0031 (JP)**
• **YAMADA, Shinsuke**
  **Tokyo 104-0031 (JP)**
• **FUJISAKI, Yuko**
  **Tokyo 104-0031 (JP)**
• **YOKOYAMA, Hiromi**
  **Tokyo 104-0031 (JP)**
• **MASHIMO, Yukifumi**
  **Tokyo 104-0031 (JP)**
• **SHIRAISHI, Kinya**
  **Tokyo 104-0031 (JP)**
• **KOIDE, Masashi**
  **Tokyo 104-0031 (JP)**

(74) Representative: **Koepe & Partner Patentanwälte Patentanwälte**
  **Postfach 86 02 45**
  **81629 München (DE)**

(56) References cited:
**EP-A1- 1 424 374          EP-A1- 1 502 929**
**JP-A- 2009 214 318      US-A1- 2008 022 893**

**Description**

TECHNICAL FIELD

The present invention relates to a coating agent for forming an inkjet ink-receiving layer for forming an image using an inkjet ink.

BACKGROUND ART

Inkjet printing generates less noise, and is capable of high speed printing and multicolor printing, so that in recent years, inkjet printing has been rapidly popularized. As a recording medium for receiving inkjet ink, products having an ink-receiving layer on the surface of a base material such as paper or a plastic film, have been conventionally used.
Furthermore, in view of heightened awareness of environmental protection in recent years, as an inkjet ink, a so-called aqueous ink which does not contain an organic solvent, or if contains, only in a small amount, has been preferably used.
An ink-receiving layer is required not only to exhibit rapid ink absorption and drying, but also to have excellent ink fixability, color developability, vividness, and image tonality. Furthermore, the printed matter obtained by carrying out inkjet printing on a recording medium, is required to have excellent image durability, particularly in the case of using an aqueous ink, excellent water resistance.
Furthermore, an inkjet printing system is a recording system of obtaining characters or images by ejecting ink droplets through very fine nozzles, and attaching ink dots onto a recording medium. However, due to non-ejection of ink droplets, difference in sizes or volumes of ink dots, and the like, missing dots may occur on the recording medium, that is, ink dots may be absent at the sites where ink dots should exist.
Missing dots cause a problem particularly in solid printing that a printing area is completely filled with dots. It causes white spots/white streaks in the printed image. Therefore, high-resolution images may not be obtained.
In order to prevent white spots/white streaks described above, there is a method of increasing the number of dots per unit area. However, this method imparts an excess amount of ink to the recording medium. Therefore, dryability of the ink or image quality may be deteriorated. Also, it is not preferable in view of the running cost.
A printing technology capable of providing printed images having fewer white spots/white streaks with small amounts of ink has not yet been provided.
In order to provide printed images having excellent water resistance and having fewer white dots and white streaks with ink amounts as small as possible, such an ink-receiving layer as ink dots are appropriately spread to an extent that the ink dots would not bleed after being brought into contact with ink dots of other colors, and fixed ink dots are not peeled off by water, should be formed on the surface of a base material.
That is, it is necessary to form a receiving layer in which hydrophilic areas where wetting of ink is well achieved and ink is appropriately spread, and hydrophobic areas where ink is not spread excessively and water resistance is exhibited after drying, are uniformly disposed in a well-balanced manner, on the surface of a base material. When hydrophilic components and hydrophobic components are just simply mixed, it is impossible to provide such an ink-receiving layer as highly vivid images formed by ink dots of multiple colors are obtained by.
Furthermore, with regard to the inkjet ink, when printed matters are required to have durability, a pigment has been incorporated as a colorant. In regard to a pigment ink, since pigments are insoluble in solvents, dispersion stabilization of the pigment in a solvent is promoted by using a pigment dispersing resin in order to maintain pigment dispersion in the ink.
As the pigment dispersing resin, generally anionic resins are frequently used, but for example, when an inkjet ink containing such an anionic pigment dispersing resin is used to form an image on the receiving layer formed from cationic compounds, the pigment aggregates on the surface of the receiving layer, ink dots are not sufficiently spread, and it is difficult to provide printed images having fewer white dot and white streaks.
On the other hand, in Patent Literatures 1 to 3, there are occasions in which surface sizing of paper is carried out in the process for papermaking, and thus, anionic compounds such as a styrene-maleic acid copolymer and a carboxyl group-containing acrylic resin have been suggested as this surface sizing agent. Since these compounds have carboxyl groups that work dominantly in the wettability, absorptiveness, and dryability of ink, the compounds have an effect of spreading ink dots. However, these compounds have a defect that the compounds have poor water resistance.
On the other hand, Patent Literatures 4 and 5 suggest an inkjet recording medium in which a surface coat layer containing an acrylic resin emulsion having a particular glass transition temperature and a particular particle diameter is formed on a base material, or a recording medium in which a coat layer containing water-dispersible resin particles having a particular minimum film-forming temperature and a particular particle diameter is formed on a base material. However, these compounds do not contain carboxyl groups that work dominantly in the wettability, absorptiveness, and dryability of ink, as an essential component, and the compounds have a defect that printed images having fewer white dots and white streaks may not be provided.

The document JP-A 2009-214-318 relates to an intermediate transfer medium on one surface of which a layer of ink receptive particles is formed. Such ink receptive particles comprise an organic resin (polymer) having polar groups resulting from the monomer of which the resin/polymer is formed. At least a part of the polar groups has a salt structure, with the ratio of polar monomer to the total content of all monomers is not less than 20 mole-% and not more than 60 mole-%. Such a layer of ink receptive particles on the intermediate transfer medium is subjected to an ink droplet discharge with an ink having a specified surface tension in a range of from 20 to 40 mN/m. Then, a recording medium is superposed onto the intermediate transfer medium and its ink receptive particle layer so as to allow the ink receptive particles to transfer the ink receptive particle layer including the ink received in the ink droplet discharge step to the recording medium so as to generate an ink image which is finally fixed.

The document EP 1 502 929 A1 relates to a method of generating functionalized latex particulates in a colloidal suspension. The method comprises steps of protecting functional groups present on polymerizable monomers with photo labile groups to form protected monomers; polymerizing the protected monomers to form a protected polymer; and exposing the protected polymer to a frequency of ultraviolet light that removes the photo labile groups from the functional groups, thereby forming the functionalized latex particulates. These latex particulates can be used in a wide variety of applications, including in ink-jet ink printing applications.

The document EP 1 424 374 A1 relates to the provision of a black ink composition comprising water, carbon black, and a fine particle emulsion, wherein (A) the content of said carbon black is less than 0.4 wt%, and wherein (B) the solid content of said fine particle emulsion is 20 times or more the content of said carbon black, and also relates to an ink set comprising the black ink composition, a recording method using the ink set, and recorded matter obtained by the method.

The document US 2008/0022839 A1 relates to the provision of a dispersion useful for the preparation of a white ink composition having a high level of opacifying properties, and of an ink composition obtained from the dispersion. The dispersion of the invention is a dispersion containing hollow polymer fine particles, wherein the hollow polymer fine particles comprise a plurality of fine particle subgroups, and the difference in average particle size between the respective fine particle subgroups adjacent to each other in terms of average particle size is less than 100 nm. The ink composition of the invention contains the dispersion.

PRIOR ART LITERATURE

PATENT LITERATURE

Patent Literature 1: Japanese Patent Application Laid-Open No. 2009-161885
Patent Literature 2: Japanese Patent No. 3854165
Patent Literature 3: Japanese Patent Application Laid-Open No. 2001-232932
Patent Literature 4: Japanese Patent No. 3721651
Patent Literature 5: Japanese Patent No. 3950688

SUMMARY OF THE INVENTION

PROBLEM TO BE SOLVED BY THE INVENTION

It is an object of the invention to provide a coating agent for forming an inkjet ink-receiving layer, which has excellent water resistance, has suppressed occurrence of white spots/white streaks of images, and has satisfactory ink dryability and excellent image forming properties.

MEANS FOR SOLVING THE PROBLEMS

The inventors conducted a thorough investigation in order to solve the problems described above, and as a result, the inventors found that the object described above can be solved by a coating agent for forming an inkjet ink-receiving layer disclosed below, thus completing the invention.

An aspect of the invention relates to a coating agent for use in forming an inkjet ink-receiving layer comprising a crosslinked vinyl emulsion including water or water containing a hydrophilic organic solvent; and a resin particle formed by emulsion polymerization of a monomer mixture comprising (A) a monomer having two or more ethylenically unsaturated groups, (B) a monomer of ethylenically unsaturated carboxylic acid or anhydride or salt thereof having one ethylenically unsaturated group; and (C) a monomer having a hydrophobic group having 1 to 12 carbon atoms and one ethylenically unsaturated group.

Preferably, the proportion of the monomer (A) is 0.1% to 5% by weight, and the proportion of the monomer (B) is 20% to 80% by weight, relative to 100% by weight of the total amount of the monomers supplied to emulsion polymerization.

The acid value of the resin particles in the crosslinked vinyl emulsion is preferably 100 to 500 mg KOH/g.

The glass transition temperature of the resin particles of the crosslinked vinyl emulsion is preferably 0°C to 100°C.

The mean volume diameter of the resin particles of the crosslinked vinyl emulsion is preferably 10 to 500 nm.

The viscosity of the crosslinked vinyl emulsion at a solids concentration of 10% by weight is preferably 0.1 to 300 mPa·s.

Preferably, the monomers supplied to emulsion polymerization do not comprise ethylenically unsaturated monomers having cationic functional groups.

Preferably, the SP value according to Fedor's method of the resin particles of the crosslinked vinyl emulsion is 3.9 to 6. 8 $(J \cdot cm^{-3})^{1/2}$, and the surface tension of the resin particles of the crosslinked vinyl emulsion according to the Macleod-Sugden method is $22 \times 10^{-3}$ to $35 \times 10^{-3}$ (N/m).

Furthermore, another aspect of the invention relates to a recording medium for forming an image, in which an inkjet ink-receiving layer formed from the aforementioned coating agent for forming an inkjet ink-receiving layer is provided on at least one surface of a base material.

Another aspect of the invention relates to a printed matter having an image formed with an inkjet ink on the aforementioned recording medium for forming an image described above.

Preferably, the inkjet ink comprises a pigment dispersing resin, and the pigment dispersing resin is a copolymer made from two components of: an aromatic ethylenically unsaturated monomer (m1); and at least one monomer (m2) selected from the group consisting of a carboxyl group-containing ethylenically unsaturated monomer, a neutralization product or a metal salt thereof, and an acid anhydride group-containing ethylenically unsaturated monomer or a half-ester thereof.

Furthermore, another aspect of the invention relates to a method for producing a printed matter, the method including: a first step of forming, on at least one surface of a base material, an inkjet ink-receiving layer using a coating agent for forming an inkjet ink-receiving layer containing a crosslinked vinyl emulsion which is formed by emulsion polymerization of (A) a monomer having two or more ethylenically unsaturated group, (B) a monomer of ethylenically unsaturated carboxylic acid or anhydride or salt thereof having one ethylenically unsaturated group; and (C) a monomer having a hydrophobic group having 1 to 12 carbon atoms and one ethylenically unsaturated group; and a second step of forming an image with an inkjet ink on the inkjet ink-receiving layer.

Preferably, the inkjet ink comprises a pigment dispersing resin, and the pigment dispersing resin is a copolymer made from two components of an aromatic ethylenically unsaturated monomer (m1), and at least one monomer (m2) selected from the group consisting of a carboxyl group-containing ethylenically unsaturated monomer, a neutralization product or a metal salt thereof, and an acid anhydride group-containing ethylenically unsaturated monomer or a half-ester thereof.

The disclosure of the present specification relates to the subject matter of Japanese Patent Application No. 2010-015176, filed on January 27, 2010.

EFFECT OF THE INVENTION

According to an aspect of the invention, a printing recording medium which has excellent water resistance, has suppressed occurrence of white spots/white streaks of images, and has satisfactory ink dryability and excellent image forming properties, can be provided.

MODES FOR CARRYING OUT THE INVENTION

The crosslinked vinyl emulsion, which is a major component of the coating agent for forming an inkjet ink-receiving layer of the invention, is prepared by emulsion polymerizing a monomer mixture comprising: (A) a monomer having two or more ethylenically unsaturated groups; (B) a monomer of ethylenically unsaturated carboxylic acid or anhydride or salt thereof having one ethylenically unsaturated group; and (C) a monomer having a hydrophobic group having 1 to 12 carbon atoms and one ethylenically unsaturated group.

First, the ethylenically unsaturated monomers constituting the crosslinked vinyl emulsion, which is a major component of the coating agent for forming an inkjet ink-receiving layer of the invention, will be described.

Here, the ethylenically unsaturated monomers, that is, the monomers having ethylenically unsaturated groups, are mainly referred to as so-called vinyl compounds having $\alpha,\beta$-unsaturated double bonds, and include (meth)acrylic acid ester monomers having (meth)acryloyl groups, and monomers having (meth)allyl groups or other vinyl groups.

Furthermore, the expressions such as "(meth)acrylic acid", "(meth)acrylate", "(meth)allyl", and "(meth)acryloyl" respectively refer to "acrylic acid and/or methacrylic acid", "acrylate and/or methacrylate", "allyl and/or methallyl", and "acryloyl and/or methacryloyl".

The monomer (A) having two or more ethylenically unsaturated groups is intended to introduce a crosslinked structure into the interior of acrylic emulsion particles that are obtained by an emulsion polymerization method.

Examples of the monomers (A) include, but are not limited to, ethylene oxide-modified phosphoric acid poly(meth)acrylates such as ethylene oxide-modified phosphoric acid di(meth)acrylate and ethylene oxide-modified phosphoric acid tri(meth)acrylate;

(poly) alkylene glycol di (meth) acrylates such as ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, poly(ethylene glycol-propylene glycol) di(meth)acrylate, poly(ethylene glycol-tetramethylene glycol) di(meth)acrylate, poly(propylene glycol-tetramethylene glycol) di(meth)acrylate, polytetramethylene glycol di(meth)acrylate, 1,3-butanediol di(meth)acrylate, neopentyl glycol di(meth)acrylate, 1,6-hexanediol di(meth)acrylate, 1,9-nonanediol di(meth)acrylate, and 2-ethyl-2-butylpropanediol di(meth)acrylate;

poly(meth)acrylates of triols, such as trimethylolpropane (tri) (meth) acrylate and glycerol (tri)(meth)acrylate;

polyol poly(meth)acrylates such as pentaerythritol tetra(meth)acrylate, dipentaerythritol hexa(meth)acrylate, polyester polyol poly(meth)acrylate, polyurethane polyol poly(meth)acrylate, and polycarbonate polyol poly(meth)acrylate;

poly(meth)acrylic acid metal salts such as zinc di(meth)acrylate;

dienes such as butadiene, isoprene, and chloroprene;

divinyl compounds such as divinylbenzene;

diallyl compounds such as diallyl phthalate; and monomers having two different types of ethylenically unsaturated groups, such as allyl (meth)acrylate, dicyclopentenyl (meth)acrylate, vinyl (meth)acrylate, and vinyl crotonate. From the viewpoints of water resistance and the stability of emulsion particles, divinylbenzene or diallyl phthalate is preferred. These monomers may be used singly, or two or more kinds may be used in combination.

According to the invention, from the viewpoints of water resistance and the stability of emulsion particles, the content of the monomer (A) is preferably 0.1% to 5% by weight, and more preferably 0.1% to 4% by weight, relative to 100% by weight of the total amount of the monomers supplied to emulsion polymerization.

The monomer (B) having a carboxyl group and one ethylenically unsaturated group is used for the purpose of increasing the wettability between the receiving layer and the ink, and of rapidly absorbing the ink to dry the base material surface.

In order to form high-resolution images using an inkjet ink, it is important to control the affinity of the inkjet ink with the surface of the ink-receiving layer, and to form ink dots having a preferred dot size and preferred color density. At the moment that the ink droplets are brought into contact with the surface of an ink-receiving layer, ink droplets appropriately wet spread, are rapidly absorbed and dried. Thereby, ink dots having a preferred diameter and preferred color density can be formed. According to the invention, when the monomer (B) having a carboxyl group and one ethylenically unsaturated group is used, the effect such as described above is markedly enhanced. Although the mechanism of this effect is not clearly understood, ink dots having a preferred dot diameter and preferred color density can be formed by the combination of: the electric affinity between the functional group carried by the pigment dispersing resin or additives that are contained in the ink and the carboxyl group carried by the emulsion resin that is contained in the ink-receiving layer; and the hydrophilic solvent contained in the ink.

Specific examples of the monomer (B) include, but are not limited to, ethylenically unsaturated carboxylic acids such as acrylic acid, acrylic acid dimers, methacrylic acid, crotonic acid, itaconic acid, itaconic anhydride, maleic acid, maleic anhydride, fumaric acid, citraconic acid, 2-(meth)acryloyloxyethyl phthalate, 2-(meth)acryloyloxypropyl phthalate, 2-(meth)acryloyloxyethyl hexahydrophthalate, 2-(meth)acryloyloxypropyl hexahydrophthalate, ethylene oxide-modified succinic acid (meth)acrylate, β-carboxyethyl (meth)acrylate, and ω-carboxypolycaprolactone (meth)acrylate, and anhydrides or salts thereof. Among them, from the viewpoint of copolymerizability, acrylic acid, methacrylic acid, crotonic acid, itaconic acid, or maleic acid is preferred. These monomers may be used singly, or two or more kinds may be used in combination.

According to the invention, from the viewpoints of the spread of ink dots on the receiving layer and water resistance, the content of the monomer (B) is preferably 20% to 80% by weight, and more preferably 25% to 80% by weight, relative to 100% by weight of the total amount of the monomers supplied to emulsion polymerization. When the content is 20% by weight or greater, wettability of the ink and absorptiveness and dryability of the ink are excellent, ink dots are sufficiently spread on the receiving layer, and white spots/white streaks do not easily occur. In the case of multicolor printing, there is no problem of bleeding between colors due to the contact between ink droplets of different colors. Furthermore, when the content is 80% by weight or less, water resistance is sufficient.

The monomer (C) having a hydrophobic group having 1 to 12 carbon atoms and one ethylenically unsaturated group is used for the purpose of enhancing water resistance of the receiving layer and bleeding resistance of the ink.

Here, it is noted that according to the invention, a monomer having one ethylenically unsaturated group, a carboxyl group, and a hydrophobic group having 1 to 12 carbon atoms is considered as the monomer (B).

Meanwhile, the hydrophobic group as used herein refers to a hydrocarbon group having 1 to 12 carbon atoms, which has low polarity and has low affinity with water.

Specific examples of the monomer (C) include, but are not limited to, chain-like alkyl (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, tertiary-butyl (meth)acrylate, 2-ethylhexyl (meth)acrylate, n-octyl (meth)acrylate, and lauryl (meth)acrylate;

cyclic alkyl (meth) acrylate monomers such as cyclohexyl (meth)acrylate, isobornyl (meth)acrylate, and dicyclopentanyl (meth)acrylate;

aromatic (meth) acrylates such as benzyl (meth) acrylate; and

aromatic vinyl monomers such as styrene, $\alpha$-methylstyrene, 2-methylstyrene, 3-methylstyrene, 4-methylstyrene, 2-methoxystyrene, 3-methoxystyrene, 4-methoxystyrene, 4-t-butoxystyrene, 4-t-butoxy-$\alpha$-methylstyrene, 4-(2-ethyl-2-propoxy)styrene, 4-(2-ethyl-2-propoxy)-$\alpha$-methylstyrene, 4-(1-ethoxyethoxy)styrene, 4-(1-ethoxyethoxy)-$\alpha$-methylstyrene, 1-butylstyrene, and 1-chloro-4-isopropenylbenzene. Among them, from the viewpoint of water resistance, aromatic monomers are preferred, and more preferred are $\alpha$-methylstyrene and styrene.

These monomers may be used singly, or two or more kinds may be used in combination. Ethylenically unsaturated monomers having a hydrophobic group having more than 12 carbon atoms has poor copolymerizability are not preferred because of their poor copolymerizability.

From the viewpoints of the balance between image forming properties and water resistance, the content of the monomer (C) is preferably 19.9% to 79.9% by weight, and more preferably 25% to 79.9% by weight, relative to 100% by weight of the total amount of the monomers supplied to emulsion polymerization.

According to the invention, a monomer other than the monomers (A) to (C) can be copolymerized, if necessary, in order to control copolymerizability, compatibility with other components, film-forming properties, and coating film properties.

Examples of such a monomer include (meth) acrylates having hydroxyl groups, such as 2-hydroxyethyl (meth)acrylate, 2-hydroxypropyl (meth)acrylate, 2-hydroxybutyl (meth)acrylate, 4-hydroxybutyl (meth)acrylate, and 2-acryloyloxyethyl-2-hydroxyethyl (meth)phthalate;

diethylene glycol mono(meth)acrylate, dipropylene glycol mono(meth)acrylate, polyethylene glycol mono (meth) acrylate, propylene glycol mono (meth) acrylate, and polypropylene glycol mono(meth)acrylate;

polytetramethylene glycol mono(meth)acrylate, poly(ethylene glycol-propylene glycol) mono(meth)acrylate, poly(ethylene glycol-tetramethylene glycol) mono(meth)acrylate, poly(propylene glycol-tetramethylene glycol) mono(meth)acrylate, and glycerol (meth)acrylate;

(meth)acrylates having ether structures, such as 2-methoxyethyl (meth)acrylate, 2-ethoxyethyl (meth)acrylate, 3-methoxybutyl (meth)acrylate, 2-methoxypropyl (meth)acrylate, diethylene glycol monomethyl ether (meth)acrylate, diethylene glycol monoethyl ether (meth)acrylate, triethylene glycol monomethyl ether (meth)acrylate, triethylene glycol monoethyl ether (meth)acrylate, diethylene glycol mono-2-ethylhexyl ether (meth)acrylate, dipropylene glycol monomethyl ether (meth)acrylate, tripropylene glycol monomethyl ether (meth)acrylate, tripropylene glycol monoethyl ether (meth)acrylate, polyethylene glycol monolauryl ether (meth)acrylate, and polyethylene glycol monostearyl ether (meth)acrylate;

(meth)acrylates having epoxy groups, such as glycidyl (meth)acrylate, methyl glycidyl (meth)acrylate, 3,2-glycidoxyethyl (meth)acrylate, 3,4-epoxycyclohexyl (meth)acrylate, 3,4-epoxybutyl (meth)acrylate, and 4,5-epoxypentyl (meth)acrylate;

vinylsilanes such as vinyltris($\beta$-methoxyethoxy)silane, vinylethoxysilane, and vinyltrimethoxysilane;

(meth)acryloyloxysilanes such as $\gamma$-(meth)acryloyloxypropyltrimethoxysilane, $\gamma$-(meth)acryloyloxypropyltriethoxysilane, and $\gamma$-(meth)acryloyloxypropyldimethoxymethylsilane;

fluoroalkyl (meth)acrylates such as trifluoroethyl (meth)acrylate, octafluoropentyl (meth)acrylate, perfluorooctyl (meth)acrylate, and tetrafluoropropyl (meth)acrylate;

(meth)acryloyloxy-modified polydimethylsiloxanes (silicone macromers); and acrylonitrile, but the examples are not limited to these monomers. These monomers may be used singly, or two or more kinds may be used in combination.

According to the invention, it is preferable that the monomers supplied to emulsion polymerization do not comprise an ethylenically unsaturated monomer having a cationic functional group. If an ethylenically unsaturated monomer having a cationic functional group is copolymerized, the monomer may interact with the functional groups contained in the pigment dispersing resin, additives, or the like in the ink, and may cause ink aggregation at the surface of the ink-receiving layer or inhibit the spread of ink dots. Furthermore, the monomer may produce acid-base bonding with the carboxyl group of the monomer (B), generating particles at the time of emulsion polymerization, or may exhibit an extreme viscosity increase.

Specific examples of the ethylenically unsaturated monomer having a cationic functional group include, for example, (meth)acrylamides such as (meth)acrylamide, N-methylol (meth)acrylamide, and N-butoxymethyl (meth)acrylamide.

The crosslinked vinyl emulsion of the invention is synthesized by a conventionally well known emulsion polymerization method. In the emulsion polymerization method, since the polymerization reaction of the polymer proceeds in water, or in water containing a hydrophilic organic solvent, in the case of copolymerizing hydrophobic and hydrophilic monomers, the emulsion particles acquire a structure in which the core section is highly hydrophobic, and the surface section of the particles is highly hydrophilic.

That is, the core section of the emulsion particles has high water resistance. Further, as the monomer (A) having two or more ethylenically unsaturated groups in one molecule is copolymerized, a crosslinked structure is introduced, so that water resistance can be further enhanced.

The crosslinked vinyl emulsion of the invention has a hydrophobic section in which a crosslinked structure has been introduced in the interior of the emulsion particles and has carboxyl groups, which are hydrophilic groups, at the surface section of the emulsion particles. Accordingly, when a coating film is formed, the interior of the emulsion particles is crosslinked, and hydrophobicity is increased. Therefore, when printing is carried out, the emulsion particles have a structure which is difficult to swell in the water or hydrophilic solvent contained in the ink. Furthermore, since plural carboxyl groups are present at the particle surfaces, and the particles adopt an associative structure, high interaction occurs between the carboxyl groups and the ink, and the carboxyl groups dominantly work on the wettability of the ink, but water resistance is not decreased. As such, since the structure having an anionic hydrophilic section and a hydrophobic section can be formed, ink dots can be appropriately spread, highly vivid images can be provided, without impairing water resistance.

According to the invention, a surfactant can be used at the time of emulsion polymerization. Examples of the surfactant include anionic and nonionic surfactants, and any conventionally known surfactants such as a reactive surfactant having an ethylenically unsaturated group or a non-reactive surfactant which does not have any ethylenically unsaturated group, can be arbitrarily used.

Examples of an anionic reactive surfactant having an ethylenically unsaturated group include alkyl ethers (examples of commercially available products include AQUALON KH-05, KH-10, and KH-20 manufactured by Daiichi Kogyo Seiyaku Co., Ltd. ; ADEKA REASOAP SR-10N and SR-20N manufactured by Adeka Corp. ; LATEMUL PD-104 manufactured by Kao Corp.);
sulfosuccinic acid esters (examples of commercially available products include LATEMUL S-120, S-120A, S-180P, and S-180A manufactured by Kao Corp.; and ELEMINOL JS-2 manufactured by Sanyo Chemical Industries, Ltd.);
alkyl phenyl ethers or alkyl phenyl esters (examples of commercially available products include AQUALON H-2855A, H-3855B, H-3855C, H-3856, HS-05, HS-10, HS-20, and HS-30 manufactured by Daiichi Kogyo Seiyaku Co., Ltd.; ADEKA REASOAP SDX-222, SDX-223, SDX-232, SDX-233, SDX-259, SE-10N, and SE-20N manufactured by Adeka Corp.);
(meth)acrylate sulfuric acid esters (examples of commercially available products include ANTOX MS-60 and MS-2N manufactured by Nippon Nyukazai Co., Ltd.; ELEMINOL RS-30 manufactured by Sanyo Chemical Industries, Ltd.); and
phosphoric acid esters (examples of commercially available products include H-3330PL manufactured by Daiichi Kogyo Seiyaku Co., Ltd.; ADEKA REASOAP PP-70 manufactured by Adeka Corp.).

Examples of a nonionic reactive surfactant that can be used in the invention include alkyl ethers (examples of commercially available products include ADEKA REASOAP ER-10, ER-20, ER-30, and ER-40 manufactured by Adeka Corp.; LATEMUL PD-420, PD-430, and PD-450 manufactured by Kao Corp.);
alkyl phenyl ethers or alkyl phenyl esters (examples of commercially available products include AQUALON RN-10, RN-20, RN-30, and RN-50 manufactured by Daiichi Kogyo Seiyaku Co., Ltd.; ADEKA REASOAP NE-10, NE-20, NE-30, and NE-40 manufactured by Adeka Corp.); and
(meth)acrylate sulfuric acid esters (examples of commercially available products include RMA-564, RMA-568, and RMA-1114 manufactured by Nippon Nyukazai Co., Ltd.).

Examples of a non-reactive nonionic surfactant include polyoxyethylene alkyl ethers such as polyoxyethylene lauryl ether and polyoxyethylene stearyl ether;
polyoxyethylene alkyl phenyl ethers such as polyoxyethylene octyl phenyl ether and polyoxyethylene nonyl phenyl ether;
sorbitan higher fatty acid esters such as sorbitan monolaurate, sorbitan monostearate, and sorbitan trioleate;
polyoxyethylene sorbitan higher fatty acid esters such as polyoxyethylene sorbitan monolaurate;
polyoxyethylene higher fatty acid esters such as polyoxyethylene monolaurate and polyoxyethylene monostearate;
glycerin higher fatty acid esters such as oleic acid monoglyceride and stearic acid monoglyceride; and
polyoxyethylene-polyoxypropylene block copolymers, and polyoxyethylene distyrenated phenyl ethers.

Furthermore, examples of a non-reactive anionic surfactant include higher fatty acid salts such as sodium oleate;
alkyl aryl sulfoncic acid salts such as sodium dodecyl benzene sulfonate;
alkyl sulfuric acid ester salts such as sodium lauryl sulfate;
polyoxyethylene alkyl ether sulfuric acid ester salts such as sodium polyoxyethylene lauryl ether sulfate;
polyoxyethylene alkyl aryl ether sulfuric acid ester salts such as sodium polyoxyethylene nonyl phenyl ether sulfate;
alkyl sulfosuccinic acid ester salts and derivatives thereof such as sodium monooctyl sulfosuccinate, sodium dioctyl sulfosuccinate, and sodium polyoxyethylene lauryl sulfosuccinate; and polyoxyethylene distyrenated phenyl esther sulfuric acid ester salts.

These surfactants may be used singly, or two or more kinds may be used in combination.

The amount of use of the surfactant is not necessarily limited, and the amount of use can be appropriately selected in accordance with the properties required when a crosslinked vinyl emulsion is finally used as a composition for forming an ink-receiving layer. For example, the amount of use of the surfactant is usually preferably 0.1 to 30 parts by weight, more preferably 0.3 to 20 parts by weight, and even more preferably in the range of 0.5 to 10 parts by weight, relative to 100 parts by weight of the total amount of the ethylenically unsaturated monomers.

When the amount of the surfactant is 0.1 parts by weight or greater, polymerization stability and mechanical stability are satisfactory. On the other hand, when the amount is 30 parts by weight or less, water resistance of the resulting recording medium is excellent.

During the emulsion polymerization carried out to obtain the crosslinked vinyl emulsion of the invention, a water-soluble protective colloid can be used in combination. Examples of the water-soluble protective colloid include polyvinyl alcohols such as a partially saponified polyvinyl alcohol, a fully saponified polyvinyl alcohol, and a modified polyvinyl alcohol;

cellulose derivatives such as hydroxyethyl cellulose, hydroxypropyl cellulose, and carboxymethyl cellulose salts; and natural polysaccharides such as guar gum. These can be utilized singly or in combination of plural kinds. The amount of use of the water-soluble protective colloid is 0.1 to 5 parts by weight, and more preferably 0.5 to 2 parts by weight, relative to 100 parts by weight of the ethylenically unsaturated monomers.

In obtaining the crosslinked vinyl emulsion of the invention, a polymerization initiator can be used. The polymerization initiator is not particularly limited as long as it has an ability to initiate radical polymerization, and a known oil-soluble polymerization initiator or a water-soluble polymerization initiator can be used.

There are no particular limitations on the oil-soluble polymerization initiator, and examples thereof include organic peroxides such as benzoyl peroxide, tert-butyl peroxybenzoate, tert-butyl hydroperoxide, tert-butyl peroxy(2-ethylhexanoate), tert-butyl peroxy-3,5,5-trimethylhexanoate, and di-tert-butyl peroxide; and

azobis compounds such as 2,2'-azobisisobutyronitrile, 2,2'-azobis-2,4-dimethylvaleronitrile, 2,2'-azobis(4-methoxy-2,4-dimethylvaleronitrile), and 1,1'-azobiscyclohexane-1-carbonitrile.

These may be used singly, or two or more kinds may be used in combination. Preferably, these polymerization initiators are used in an amount of 0.1 to 10.0 parts by weight relative to 100 parts by weight of the ethylenically unsaturated monomers.

According to the invention, it is preferable to use a water-soluble polymerization initiator. For example, conventionally known polymerization initiators such as ammonium persulfate, potassium persulfate, hydrogen peroxide, and 2,2'-azobis(2-methylpropionamidine) dihydrochloride can be preferably used.

Furthermore, when the emulsion polymerization is carried out, a reducing agent can be used in combination with the polymerization initiator as desired. Reducing agents make it easy to accelerate the rate of emulsion polymerization or to carry out emulsion polymerization at a low temperature. Examples of such a reducing agent include reducing organic compounds such as ascorbic acid, erythorbic acid, tartaric acid, citric acid, glucose, and metal salts of formaldehyde sulfoxylate;

reducing inorganic compounds such as sodium thiosulfate, sodium sulfite, sodium bisulfite, and sodium metabisulfite; and ferrous chloride, Rongalite, and thiourea dioxide.

Preferably, the amount of the reducing agent is 0.05 to 5. 0 parts by weight relative to 100 parts by weight of the total amount of the ethylenically unsaturated monomers. Meanwhile, without the polymerization initiator described above, polymerization can also be carried out by a photochemical reaction or irradiation of a radiation. The polymerization temperature is set to a temperature equal to or higher than the half-life temperature of each polymerization initiator. For example, when a peroxide-based polymerization initiator is used, the polymerization temperature may be usually set to about 70°C. The polymerization time is not particularly limited, and is usually 2 to 24 hours.

According to the invention, as an aqueous medium used at the time of emulsion polymerization, water may be used. A hydrophilic organic solvent can also be used to the extent that the purpose of the invention is not impaired.

Furthermore, if necessary, a buffering agent and a chain transfer agent can be used. Examples of the buffering agent include sodium acetate, sodium citrate, and sodium bicarbonate. Examples of the chain transfer agent include mercaptans such as octylmercaptan, 2-ethylhexyl thioglycolate, octyl thioglycolate, stearylmercaptan, laurylmercaptan, and t-dodecylmercaptan.

According to the invention, all or a part of the acidic functional groups of the monomer (B) having a carboxyl group and one ethylenically unsaturated group can be neutralized with a basic compound before polymerization or after polymerization.

Examples of the neutralizing agent that can be used include ammonia; alkylamines such as trimethylamine, triethylamine, and butylamine; alcohol amines such as 2-methylaminoethanol, diethanolamine, triethanolamine, and aminomethylpropanol; and bases such as morpholine.

According to the invention, the acid value of the resin particles of the crosslinked vinyl emulsion can be adjusted by the composition of the ethylenically unsaturated monomers supplied to polymerization, but the acid value is preferably 100 to 500 mg KOH/g. When the acid value is 100 mg KOH/g or greater, wettability of the ink and absorptiveness and dryability of the ink are excellent, ink dots are sufficiently spread on the receiving layer, and white spots/white streaks do not easily occur. Furthermore, in the case of multicolor printing, there is no occurrence of bleeding between colors due to the contact between ink droplets of different colors. When the acid value is 500 mg KOH/g or less, water resistance is excellent.

Meanwhile, the acid value as used herein is a value measured by the operation described below.

<Method for measuring acid value>

About 1 g of a sample is accurately weighed in a stoppered Erlenmeyer flask, and 100 mL of a liquid mixture of toluene/ethanol (volume ratio: toluene/ethanol = 2/1) is added thereto to dissolve the sample. To this solution, a phenolphthalein reagent liquid is added as an indicator, and the solution is maintained for 30 seconds. Subsequently, titration is carried out using a 0.1 N alcoholic potassium hydroxide solution until the solution turns pink.

The acid value (mg KOH/g) is determined by the following formula, as a value for a resin in a dry state.

$$\text{Acid value (mg KOH/g)} = \{(5.611 \times a \times F)/S\}/(\text{concentration of non-volatile components}/100)$$

provided that S: collected amount of sample (g),
a: amount of consumption (mL) of 0.1 N alcoholic potassium hydroxide solution,
F: titer value of 0.1 N alcoholic potassium hydroxide solution.

According to the invention, the glass transition temperature (Tg) of the resin particles of the crosslinked vinyl emulsion can be adjusted by the composition of the ethylenically unsaturated monomers supplied to polymerization, but the glass transition temperature is preferably 0°C to 70°C. When the glass transition temperature is 0°C or higher, blocking (refers to the state in which the printed surface and the back surface of the base material are fused and are not easily detached) does not occur at the time of lamination of the printed matter. When the glass transition temperature is 70°C or lower, the texture of the printed matter is excellent.

Meanwhile, the glass transition temperature as used herein can be calculated by Fox's method.

Here, Fox's method (T.G. Fox, Phys. Rev., 86, 652 (1952)) is to estimate the Tg of a copolymer from the Tg values of individual homopolymers as presented by the following formula.

$$1/Tg = W_1/Tg_1 + W_2/Tg_2 + \ldots + W_n/Tg_n$$

[in the formula, Tg represents the glass transition temperature (indicated as absolute temperature) of the copolymer; $Tg_1$, $Tg_2$, ..., $Tg_n$ respectively represent the glass transition temperatures (indicated as absolute temperatures) of homopolymers of various monomer components; and $W_1$, $W_2$, ..., $W_n$ respectively represent the weight fractions of various monomer components.]

The mean volume diameter of the crosslinked vinyl emulsion of the invention can be adjusted by the composition of the ethylenically unsaturated monomers supplied to polymerization, the type and amount of the surfactant used at the time of polymerization, the polymerization operation, and the like. However, from the viewpoint of stability of the particles, the mean volume diameter is preferably 40 to 400 nm, and more preferably 40 to 250 nm. Furthermore, in view of stability of the particles, the content of coarse particles having a diameter of greater than 1 $\mu$m is 5% by weight or less, preferably. Meanwhile, the mean volume diameter according to the invention can be measured by a dynamic light scattering method. More specifically, the mean volume diameter can be measured by the operation described below.

<Method for measuring mean volume diameter>

The crosslinked vinyl emulsion is diluted with water to 200 to 1000 times, depending on the solids concentration. About 5 mL of the dilution is introduced into the cell of an analyzer [MICROTRACK manufactured by Nikkiso Co., Ltd.], and the refractive index conditions of the solvent (water in the invention) and the resin are inputted in accordance with the sample. Thereafter, measurement is carried out. The peak of the volume diameter distribution data (histogram) is designated as the mean volume diameter of the invention.

According to the invention, the viscosity of the crosslinked vinyl emulsion at a solids concentration of 10% by weight can be adjusted by the composition of the ethylenically unsaturated monomers supplied to polymerization, the type and amount of the surfactant used at the time of polymerization, the polymerization operation, and the like, but the viscosity is preferably 0.1 to 300 mPa·s. When the viscosity at a solids concentration of 10% by weight is 300 mPa·s or less, in the case of forming an inkjet ink-receiving layer, it is not necessary to dilute the crosslinked vinyl emulsion before coating.

Meanwhile, the viscosity as used herein can be measured by the operation described below.

<Method for measuring viscosity of emulsion>

A sample having the solids concentration adjusted to 10% by weight was taken in a glass bottle, and the viscosity after one minute was measured using a vibratory viscometer (VM-10A manufactured by Sekonic Corp.).

According to the invention, the SP value according to Fedor's method [R.F. Fedor, Polym. Eng. Sci., 14(2) 147 (1974)] of the resin particles of the crosslinked vinyl emulsion can be adjusted by the composition of the ethylenically unsaturated monomers supplied to polymerization, but the SP value is preferably 3.9 to 6.8 $(J \cdot cm^{-3})^{1/2}$, and more preferably 4.9 to 5.9 $(J \cdot cm^{-3})^{1/2}$. When the SP value is 3.9 $(J \cdot cm^{-3})^{1/2}$ or greater, wettability of the ink and absorptiveness and dryability of the ink are excellent, ink dots are sufficiently spread on the receiving layer, and there is no occurrence of white spots/white streaks. There is no occurrence of bleeding between colors due to the contact between ink droplets of different colors. When the SP value is 6.8 $(J \cdot cm^{-3})^{1/2}$ or less, water resistance is sufficient.

According to the invention, the surface tension according to the Macleod-Sugden method [Maclead, Trans, Faraday Soc., 19, 38 (1923)] of the resin particles of the crosslinked vinyl emulsion can be adjusted by the composition of the ethylenically unsaturated monomers supplied to polymerization, but the surface tension is preferably $22 \times 10^{-3}$ to $35 \times 10^{-3}$ (N/m). When the surface tension is $22 \times 10^{-3}$ (N/m) or greater, wettability of the ink and absorptiveness and dryability of the ink are excellent, ink dots are sufficiently spread on the receiving layer, and there is no occurrence of white spots/white streaks. There is no occurrence of bleeding between colors due to the contact between ink droplets of different colors. When the surface tension is $35 \times 10^{-3}$ (N/m) or less, water resistance is excellent.

It is important that, in the case of forming an image using an ink composition that will be described below, the value of surface tension of the inkjet ink-receiving layer is neat to the value of dynamic surface tension of an ink composition. When the surface tension value of the receiving layer is near to the value of dynamic surface tension of the ink composition, the ink dots on the receiving layer are adequately spread, and high-resolution images are obtained.

As such, the SP value and the surface tension value of the resin particles of the crosslinked vinyl emulsion serve can be the criteria for determining the compatibility (interaction) between the resin particles and the ink composition. Since the good or bad of images changes with these values, in order to obtain highly detailed images, these values become very important.

The coating agent for forming an inkjet ink-receiving layer according to the invention is composed of one kind of the crosslinked vinyl emulsions described above, or is composed of two or more kinds thereof in combination. Particularly, from the viewpoint of the balance between image forming properties and water resistance, it is preferable to use a copolymer (X) formed by using an aromatic monomer as the monomer (C) and a copolymer (Y) formed by using only a monomer other than an aromatic compound as the monomer (C), in combination. Here, in the copolymer (X), an aromatic monomer and a monomer other than an aromatic compound may be used in combination as the monomer (C).

Meanwhile, in the copolymer (X), the aromatic monomer (C) is preferably contained in an amount of 1% to 79.9% by weight, and more preferably 1% to 50% by weight, relative to 100% by weight of the total amount of the monomers supplied to emulsion polymerization. Furthermore, the monomer (C) other than an aromatic compound is contained in an amount of 0% to 78.9% by weight, and more preferably 0% to 75% by weight.

Furthermore, a film-forming aid, a defoamant, a leveling agent, an antiseptic, a pH adjusting agent, a viscosity adjusting agent, or other compounds may also be incorporated as necessary. These additives can be arbitrarily selected from conventionally known compounds according to the purpose.

The film-forming aid helps in the formation of a coating film, and is in charge of a temporary plasticization function of enhancing the strength of the coating film by relatively rapidly evaporating after the coating film has been formed. An organic solvent having a boiling point of 110°C to 200°C is preferably used.

Specific examples thereof include propylene glycol monobutyl ether, ethylene glycol methyl ether, ethylene glycol ethyl ether, ethylene glycol monobutyl ether, diethylene glycol diethyl ether, dipropylene glycol monopropyl ether, carbitol, butylcarbitol, dibutylcarbitol, and benzyl alcohol. Among them, ethylene glycol monobutyl ether and propylene glycol monobutyl ether are particularly preferred because these compounds exhibit a high film-forming aid effect even if used in small amounts. These film-forming aids are preferably contained in an amount of 0.5% to 15% by weight in the coating agent for forming an inkjet ink-receiving layer.

The viscosity adjusting agent may be used in an amount of 1 to 100 parts by weight relative to 100 parts by weight of the crosslinked vinyl emulsion. Examples of the viscosity adjusting agent include carboxymethyl cellulose, methyl cellulose, hydroxymethyl cellulose, ethyl cellulose, polyvinyl alcohol, polyacrylic acid (and salts thereof), oxidized starch, starch phosphate, and casein.

The coating agent for forming an inkjet ink-receiving layer of the invention may be composed of the crosslinked vinyl emulsion alone, or may be used in combination with an inorganic filler such as colloidal silica or silica.

Colloidal silica may be incorporated later into the crosslinked vinyl emulsion of the invention. Otherwise, an aqueous dispersion of colloidal silica may be incorporated into the aqueous medium at the time of the synthesis of the crosslinked vinyl emulsion.

Furthermore, the coating agent for forming an inkjet ink-receiving layer of the invention may have an aqueous glossy resin incorporated therein in order to impart gloss to the ink-receiving layer. Specific examples include JONCRYL 52J, JONCRYL 62J, JONCRYL 70J, and JONCRYL 7667 manufactured by BASF Corp.; LUSIDEN 400SF manufactured by Nippon Polymer Co., Ltd.; and EMUPOLY SG-5157 manufactured by Gifu Shellac Manufacturing Co., Ltd.

The coating agent for forming inkjet ink-receiving layer of the invention may further comprise a crosslinking agent. Examples thereof include methylolated melamine, methylolated urea, methylolated hydroxypropylene urea, polyfunctional isocyanate compounds, and polyfunctional epoxy compounds.

As the base material for applying the coating agent for forming an inkjet ink-receiving layer of the invention, paper such as high-quality paper, medium-quality paper, coated paper, art paper, gloss paper, paper for newspaper, various communication papers, various special papers, and cardboards; and films formed from plastics such as polyethylene terephthalate, diacetates, triacetates, cellophane, celluloid, polycarbonates, polyimides, polyvinyl chloride, polyvinylidene chloride, polyacrylate, polyethylene, and polypropylene can be used.

The surface of the base material may be a smooth surface, may have surface unevenness, or may be any of transparent, translucent and opaque.

Furthermore, a product obtained by pasting two or more kinds of these base materials together may also be used. Furthermore, a peelable adhesive layer or the like may be provided on the opposite side of the printed surface, and after printing, an adhesive layer or the like may be provided on the printed surface.

The coating agent for forming an inkjet ink-receiving layer of the invention can be applied on the aforementioned base material by a known method, and examples of the method include a roll coating method, a blade coating method, an air knife coating method, a gate roll coating method, a bar coating method, a size press method, a spray coating method, a die coating method, a lip coating method, a comma coating method, a spin coating method, a gravure coating method, and a curtain coating method.

Drying methods are not particularly limited to, but hot air drying, an infrared method, or a reduced pressure method may be exemplified. The drying conditions may depend on the film-forming properties of the coating agent for forming an inkjet ink-receiving layer, the amount of coating, or the selected additives, however, hot air heating at about 60°C to 180°C may be employed, or infrared heating at about 20°C to 60°C may be employed, usually.

As a result of the application as described above, an inkjet ink-receiving layer is formed on the base material, and thus, a recording medium for forming an image can be obtained. When printing is carried out with an inkjet ink on the recording medium, a printed matter having an image formed thereon can be preferably obtained.

Meanwhile, the inkjet ink-receiving layer may be provided on only one surface of the base material, or may be provided on both surfaces.

Furthermore, if necessary, the base material can also be subjected to a super calender treatment, a cast treatment or the like for the purpose of planarization, gloss enhancement or surface strength enhancement of the ink-receiving layer.

Furthermore, the coating agent for forming an inkjet ink-receiving layer of the invention can be filled in an ink cartridge of an inkjet printer, and printing can be carried out by an inkjet system simultaneously with or prior to a printing ink.

The amount of coating of the inkjet ink-receiving layer of the invention as a dry weight is preferably in the range of 0.2 g/m$^2$ to 50 g/m$^2$, and more preferably 0.5 g/m$^2$ to 30 g/m$^2$. When the amount of coating is 0.2 g/m$^2$ or greater, color developability of the ink is superior as compared with the case that an ink-receiving layer is not provided. On the other hand, when the amount of coating is 50 g/m$^2$ or less, the occurrence of curling can be suppressed.

Examples of the ink used in the case of performing inkjet recording on the recording medium for forming an image of the invention as discussed above, include a water-based ink, a solvent-based ink, a solid ink (hot melt ink), and radiation-curable inks such as a UV-curable ink and an EB-curable ink. From the viewpoints of environmental problems and durability of the printed matter, it is preferable to use a water-based pigment ink.

A preferred constitution of the ink will be described below.

Preferably, the inkjet ink comprises a pigment dispersing resin, and the pigment dispersing resin is a copolymer composed of two components of: an aromatic ethylenically unsaturated monomer (m1); and at least one monomer (m2) selected from the group consisting of a carboxyl group-containing ethylenically unsaturated monomer, a neutralization product or a metal salt thereof, and an acid anhydride group-containing ethylenically unsaturated monomer or a half-ester thereof.

When such a pigment dispersing resin is used, the affinity between the inkjet ink and the ink-receiving layer surface is appropriately controlled, and ink dots are appropriately spread. Therefore, it is advantageous in view of reproducibility of high-resolution images. It is also advantageous in view of storage stability of the ink itself.

Examples of the aromatic ethylenically unsaturated monomer (m1) constituting the pigment dispersing resin include styrene, α-methylstyrene, 2-methylstyrene, 3-methylstyrene, 4-methylstyrene, 2-methoxystyrene, 3-methoxystyrene, 4-methoxystyrene, 4-t-butoxystyrene, 4-t-butoxy-α-methylstyrene, 4-(2-ethyl-2-propoxy)styrene, 4-(2-ethyl-2-propoxy)-α-methylstyrene, 4-(1-ethoxyethoxy)styrene, 4-(1-ethoxyethoxy)-α-methylstyrene, 1-butylstyrene, and 1-chloro-4-isopropenylbenzene, but the examples are not limited to these. These monomers may be used singly, or plural kinds may be used in combination.

Examples of the at least one monomer (m2) selected from the group consisting of a carboxyl group-containing ethylenically unsaturated monomer, a neutralization product or a metal salt thereof, and an acid anhydride group-containing ethylenically unsaturated monomer or a half-ester thereof, which constitutes the pigment dispersing resin, include carboxyl group-containing aliphatic ethylenically unsaturated carboxylic acids such as acrylic acid, methacrylic acid, 2-carboxyethyl (meth)acrylate, 2-carboxypropyl (meth)acrylate, 3-carboxypropyl (meth)acrylate, 4-carboxybutyl (meth)acrylate, a (meth)acrylic acid dimer, maleic acid, fumaric acid, monomethylmaleic acid, monomethylfumaric acid, aconitic acid, sorbic acid, cinnamic acid, α-chlorosorbic acid, glutaconic acid, citraconic acid, mesaconic acid, itaconic acid, tiglic acid, angelic acid, senecioic acid, crotonic acid, isocrotonic acid, mucobromic acid, mucochloric acid, sorbic acid, muconic acid, aconitic acid, penicillic acid, geranic acid, citronellic acid, a polylactone-based (meth)acrylic acid ester having carboxyl groups at the ends as a result of ring-opening addition of a lactone ring, such as ω-carboxypolycaprolactone mono (meth) acrylate, and an alkylene oxide-added succinic acid (meth)acrylate having carboxyl groups at the ends where an alkylene oxide such as ethylene oxide or propylene oxide has been repeatedly added; for example, carboxyl group-containing ethylenically unsaturated carboxylic acids having an aliphatic ring or an aromatic ring, such as 2-(meth)acryloyloxyethyl hexahydrophthalate, 2-(meth)acryloyloxyethyl phthalate, 2-(meth)acryloyloxypropyl phthalate, 2-(meth)acryloyloxybutyl phthalate, 2-(meth)acryloyloxyhexyl phthalate, 2-(meth)acryloyloxyoctyl phthalate, 2-(meth)acryloyloxydecyl phthalate, 2-vinylbenzoic acid, 3-vinylbenzoic acid, 4-vinylbenzoic acid, 4-isopropenylbenzene carboxylic acid, cinnamic acid, and 7-amino-3-vinyl-3-cephem-4-carboxylic acid; and neutralization products, metal salts, acid anhydrides and half-esters of acid anhydrides thereof, but the examples are not particularly limited to these. These compounds may be used singly, or plural kinds may be used in combination.

The pigment dispersing resin can be synthesized by a solution polymerization method, an emulsion polymerization method, a suspension polymerization method, a bulk polymerization method, or the like, which are conventionally well known.

Examples of commercially available products of the pigment dispersing resin include styrene-acrylic acid resins (JONCRYL series) manufactured by BASF Corp. (Johnson polymer Ltd.).

As the pigment contained in the water-based pigment ink, conventionally known pigments can be used.

As black pigments contained in the water-based pigment ink, carbon blacks produced by a furnace method or a channel method can be exemplified. For example, carbon blacks preferably have characteristics such as a primary particle diameter of 11 to 40 nm, a specific surface area according to the BET method of 50 to 400 $m^2/g$, a volatile content of 0.5% to 10% by mass, and a pH value of 2 to 10. Commercially available products having these characteristics include the following. Examples include Nos. 33, 40, 45, 52, 900, 2200B, 2300, MA7, MA8, MCF88 (all manufactured by Mitsubishi Chemical Corp.); RAVEN® 1255 (manufactured by Columbian Chemicals Co.); REGAL® 330R, 400R, 660R, MOGUL® L, ELFTEX® 415 (all manufactured by Cabot Corp.); NIPEX 90, NIPEX 150T, NIPEX 160IQ, NIPEX 170IQ, NIPEX 75, PRINTEX 85, PRINTEX 95, PRINTEX 90, PRINTEX 35, and PRINTEX U (all manufactured by Ebonic Degussa Japan Co.), and any one can be preferably used.

Examples of yellow pigments contained in the water-based pigment ink include C.I. Pigment Yellow 1, 2, 3, 12, 13, 14, 16, 17, 20, 24, 74, 83, 86, 93, 94, 95, 109, 110, 117, 120, 125, 128, 137, 138, 139, 147, 148, 150, 151, 154, 155, 166, 168, 180, 185, and 213.

Examples of magenta pigments contained in the water-based pigment ink include C.I. Pigment Red 5, 7, 9, 12, 31, 48, 49, 52, 53, 57, 97, 112, 122, 147, 149, 150, 168, 177, 178, 179, 202, 206, 207, 209, 238, 242, 254, 255, and 269; and C.I. Pigment Violet 19, 23, 29, 30, 37, 40, and 50.

Examples of cyan pigments contained in the water-based pigment ink include C.I. Pigment Blue 1, 2, 3, 15:3, 15:4, 16, and 22; and C.I. Vat Blue 4 and 6.

As the pigments contained in the water-based pigment ink, pigments of colors other than those described above, self-dispersing pigments, and the like can also be used. These pigments may be used singly or in combination of two or more kinds, in an ink of each color.

The content of the pigment contained in the water-based pigment ink is, as a weight ratio, preferably in the range of 0.1% to 20% by weight, and more preferably 0.1% to 12% by weight, in the ink.

A suitable medium that is used in the ink is a mixed solvent of water and a water-soluble solvent. Preferably, the water is not the common water containing various ions, but -ion-exchanged water (deionized water).

As the water-soluble solvent that is used in a mixture with water, glycol ethers and diols are preferred. Among them, (poly) alkylene glycol monoalkyl ethers, and alkanediols having 3 to 6 carbon atoms are effective. These solvents penetrate into paper very rapidly. These solvents penetrate into a base material having low solvent absorptiveness, such as coated paper or art paper, rapidly, too. Accordingly, drying is achieved fast at the time of printing, and accurate printing can be realized. Furthermore, since the solvents have high boiling points, they sufficiently work as moisturizers.

Specific examples of glycol ethers include ethylene glycol monoethyl ether, ethylene glycol monobutyl ether, diethylene glycol monomethyl ether, diethylene glycol monoethyl ether, diethylene glycol monopropyl ether, diethylene glycol monobutyl ether, diethylene glycol monopentyl ether, diethylene glycol monohexyl ether, triethylene glycol monomethyl ether, triethylene glycol monoethyl ether, triethylene glycol monopropyl ether, triethylene glycol monobutyl ether, tetraethylene glycol monomethyl ether, tetraethylene glycol monobutyl ether, propylene glycol monopropyl ether, propylene glycol monobutyl ether, dipropylene glycol monomethyl ether, and tripropylene glycol monomethyl ether.

Specific examples of diols include 1,2-propanediol, 1,3-propanediol, 1,2-butanediol, 1,3-butanediol, 1,2-pentanediol, 1,5-pentanediol, 1,2-hexanediol, 1,6-hexanediol, and 2-methyl-2,4-pentanediol.

Among these, highly effective compounds are diethylene glycol monobutyl ether, diethylene glycol monohexyl ether, triethylene glycol monomethyl ether, 1,2-propanediol, 1,2-butanediol, 1,3-butanediol, 1,2-hexanediol, and 2-methyl-2,4-pentanediol.

These solvents may be used singly, or a mixture of plural solvents can also be used.

Furthermore, depending on the type of the base material to be used in printing, water-soluble nitrogen-containing heterocyclic compounds such as 2-pyrrolidone, N-methylpyrrolidone, N-ethylpyrrolidone, N-methyloxazolidinone, and N-ethyloxazolidinone can also be added for the purpose of enhancing solubility.

The content of the water-soluble organic solvent such as described above in the ink is generally in the range of from 3% by mass to 60% by mass, and more preferably in the range of from 3% by mass to 50% by mass, relative to the total mass of the ink. Furthermore, the content of water is preferably in the range of from 10% by mass to 90% by mass, and more preferably in the range of from 30% by mass to 80% by mass, relative to the total mass of the ink.

The water-based pigment ink may contain an aqueous emulsion.

When the ink contains an aqueous emulsion, the resistance of the printed coating film can be enhanced without much increasing the ink viscosity. Thereby, water resistance, solvent resistance, scratch resistance and the like are enhanced. An enhancement of resistance to a certain extent can also be expected by adding a water-soluble resin, but the viscosity of the ink tends to rise. In the case of an inkjet ink, there is a suitable range of viscosity for the ejection of the ink through nozzles. If the viscosity is too high, the ink may not be ejected, so that it is important to suppress an increase of the viscosity.

The content of the aqueous emulsion such as described above in the ink, as the solids concentration of the emulsion, is preferably in the range of 2% to 30% by weight, and more preferably in the range of 3% to 20% by weight, relative to the total weight of the ink.

EXAMPLES

Hereinafter, the invention will be more specifically described by way of Examples. In the Examples, the "parts" represents "parts by weight", and "percent (%)" represents "percent (%) by weight".

<Synthesis of crosslinked vinyl emulsion>

(Synthesis Example 1)

In a reactor equipped with a stirrer, a thermometer, a dropping funnel, and a reflux condenser, 136.2 parts of ion-exchanged water, 1.6 parts of 24% aqueous solution of RA-9607 (manufactured by Nippon Nyukazai Co., Ltd.) as a surfactant, and 0.13 parts of sodium hydrogen carbonate as a buffering agent were introduced.

Separately, 0.5 parts of diallyl phthalate, 40 parts of methacrylic acid, 30 parts of ethyl acrylate, 29.5 parts of butyl acrylate, 80 parts of ion-exchanged water, and 6.4 parts of a 24% aqueous solution of RA-9607 described above as a surfactant were mixed, and thus a pre-emulsion was prepared.

Subsequently, 5% of the pre-emulsion was added to the reactor described above. The internal temperature of the reactor was increased to 75°C, and the reactor was sufficiently purged with nitrogen. Subsequently, 10% of 6 parts (that is, 0. 6 parts) of a 5% aqueous solution of potassium persulfate was added thereto, and thus polymerization was initiated.

The interior of the reaction system was maintained at 75°C for 5 minutes, and then while the internal temperature was maintained at 75°C to 80°C, the rest of the pre-emulsion and the rest of the 5% aqueous solution of potassium persulfate (that is, 5.4 parts) were added dropwise thereto over 2 hours. The mixture was further stirred for 2 hours. After it was confirmed that the polymerization ratio exceeded 98% by a measurement of the solids concentration, the temperature was cooled to 30°C. The solids concentration was adjusted to 30% with ion-exchanged water, and thus a vinyl emulsion was obtained. Meanwhile, the solids concentration was determined by drying the reaction liquid in a hot air oven under the conditions of 150°C for 20 minutes, and measuring the residue.

(Synthesis Examples 2 to 25)

Vinyl emulsions of Synthesis Examples 2 to 25 were obtained by synthesizing the emulsions in the same manner as in Synthesis Example 1, using the monomer compositions indicated in Table 1.

For the vinyl emulsions obtained in Synthesis Examples 1 to 25, the acid value, glass transition temperature (Tg), mean volume diameter, viscosity, SP value, and surface tension were measured by the methods described below. The results are presented in Table 1.

<Acid value>

About 1 g of a vinyl emulsion was accurately weighed in a stoppered Erlenmeyer flask, and 100 mL of a liquid mixture of toluene/ethanol (volume ratio: toluene/ethanol = 2/1) was added thereto to dissolve the vinyl emulsion. To this solution, a phenolphthalein reagent liquid was added as an indicator, and the solution was maintained for 30 seconds. Subsequently, titration was carried out using a 0.1 N alcoholic potassium hydroxide solution until the solution turned pink.

The acid value (mg KOH/g) was determined by the following formula, as a value for a resin in a dry state.

$$\text{Acid value (mg KOH/g)} = \{(5.611 \times a \times F)/S\}/(\text{concentration of non-volatile components}/100)$$

provided that S: collected amount of sample (g),

    a: amount of consumption (mL) of 0.1 N alcoholic potassium hydroxide solution,
    F: titer value of 0.1 N alcoholic potassium hydroxide solution.

<Tg>

The glass transition temperature of a vinyl emulsion was determined by calculation using Fox's method (T.G. Fox, Phys. Rev., 86, 652 (1952)).

<Mean volume diameter>

A vinyl emulsion was diluted 200 to 1000 times with water. About 5 mL of the dilution was injected into the cell of an analyzer [MICROTRACK manufactured by Nikkiso Co., Ltd.], and the refractive index conditions of water and the resin were inputted. Thereafter, measurement was carried out. The peak of the volume particle diameter distribution data (histogram) thus obtained was designated as the mean volume diameter.

<Viscosity>

In a glass bottle, the solids concentration of a vinyl emulsion was adjusted to 10% by weight by adding ion-exchanged water, and the viscosity after one minute was measured using a vibratory viscometer (VM-10A manufactured by Sekonic Corp.).

<SP value>

The SP value of the resin particles of a crosslinked vinyl emulsion was determined by Fedor's method. Specifically, the SP value was calculated based on the descriptions of R. F. Fedor, Polym. Eng. Sci., 14(2), 147 (1974).

<Surface tension>

The surface tension of the resin particles of a crosslinked vinyl emulsion was determined by the Macleod-Sugden method. Specifically, the surface tension was calculated based on the descriptions of Maclead, Trans, Faraday Soc., 19, 38 (1923).

<Preparation of inkjet ink>

15 parts of a cyan pigment ("LIONOL BLUE 7351" manufactured by Toyo Ink Mfg Co. Ltd.), 1.5 parts of an acrylic resin-based pigment dispersant ["JONCRYL® 680" (content: styrene-acrylic acid copolymer) manufactured by BASF Corp. (Johnson Polymers, Ltd.)], 5.0 parts of glycerin, and 78.5 parts of ion-exchanged water were dispersed for 2 hours in a sand mill, and thus an aqueous pigment dispersion was obtained.

The following components including the resulted pigment dispersion were mixed under stirring with a Disper, and then the mixture was filtered through a membrane made of nitrocellulose and having a pore size of 0.45 μm. Thus, a blue ink composition was obtained.

| | |
|---|---|
| Pigment dispersion | 20 parts |
| Glycerin | 10 parts |
| 1,3-Propanediol | 5 parts |
| Acrylic resin emulsion | 2.3 parts |
| ("F-157" manufactured by Nippon Polymer Co., Ltd. ; solids concentration 40%) | |
| Ion-exchanged water | 62.7 parts |

<Preparation of coating agent for forming inkjet ink-receiving layer, preparation of printed matter>

(Example 1)

200 Parts of ion-exchanged water was incorporated into 100 parts of the vinyl emulsion obtained in Synthesis Example 1, and thus a coating agent for forming an inkjet ink-receiving layer at a solids concentration of 10% was prepared. This coating agent was applied on a coated paper [OK OVERCOAT PLUS, manufactured by Oji Paper Co., Ltd.] using a wire bar No. 2, and was dried for 2 minutes in a hot air oven at 60°C. Thus, a recording medium having an inkjet ink-receiving layer laminated thereon was produced.

Next, the blue ink composition was filled in the cartridge of an inkjet printer ("PM-750C" manufactured by Seiko Epson Corp.), and printed matters for evaluation were produced by performing pattern printing.

(Examples 2 to 17, Examples 21 to 24, and Comparative Examples 1 to 4)

Printed matters for evaluation were produced in the same manner as in Example 1, except that the emulsion of Synthesis Example 1 was replaced with the emulsions indicated in Table 2.

(Examples 18 to 20)

Printed matters for evaluation were produced in the same manner as in Example 1, except that the emulsion of Synthesis Example 1 was replaced with mixtures of emulsions indicated in Table 2 (the numbers indicate the weight ratios of solid components).

The evaluation results on white spots/white streaks, dryability, and water resistance are presented in Table 2. Specific evaluation methods will be described below.

<White spots/white streak>

A solid printed area with a print ratio of 100% was evaluated by visual inspection. A sample in which white spots/white streaks had obviously occurred was rated as X; a sample in which white spots/white streaks had slightly occurred was rated as Δ; and a sample having no white spots/white streaks was rated as O. Particularly, a sample in which there were no white spots/white streaks, and a uniform solid printed area without any concentration unevenness was obtained, was rated as ◎ .

<Dryability>

Immediately after printing, copier paper was pressed firmly with a finger on a solid printed area with a print ratio of 200%. A sample in which color transfer was observed was rated as X; a sample in which slight color transfer was observed was rated as Δ; and a sample in which no color transfer was observed was rated as ○.

<Water resistance>

One droplet of water was dropped with a dropper on a solid printed area with a print ratio of 100%, and after one minute, water was wiped with a tissue paper. Subsequently, the sample was evaluated by visual inspection. A sample in which the ink had come off was rated as X; a sample in which the ink had slightly come off was rated as Δ; and a sample in which there was no change was rated as O. Particularly, among those samples in which there was no change by visual inspection, a sample in which there was no change by visual inspection even after the printed area was rubbed five times with a cotton swab soaked with water, was rated as ◎.

[Table 1]

| Synthesis Example | Monomer(A) | | | Monomer(B) | | | Monomer(C) | | | | | | Other monomer | | | Total |
|---|---|---|---|---|---|---|---|---|---|---|---|---|---|---|---|---|
| | DAP | DVB | MAA | AA | IA | MMA | EA | BA | 2EHA | LMA | CHMA | ST | SMA | 2-MTA | Aam | |
| Syn.Ex.1 | 0.5 | | 40 | | | | 30 | 29.5 | | | | | | | | 100 |
| Syn.Ex.2 | | 0.5 | 40 | | | | 30 | 29.5 | | | | | | | | 100 |
| Syn.Ex.3 | 0.5 | | 35 | 5 | | | 30 | 29.5 | | | | | | | | 100 |
| Syn.Ex.4 | 0.5 | | 30 | | 10 | | 30 | 29.5 | | | | | | | | 100 |
| Syn.Ex.5 | 0.5 | | 40 | | | 16.5 | 43 | | | | | | | | | 100 |
| Syn.Ex.6 | 0.5 | | 40 | | | | 30 | 19.5 | 10 | | | | | | | 100 |
| Syn.Ex.7 | 0.5 | | 40 | | | | 30 | 19.5 | | 10 | | | | | | 100 |
| Syn.Ex.8 | 0.5 | | 40 | | | | 30 | 19.5 | | | 10 | | | | | 100 |
| Syn.Ex.9 | 0.5 | | 40 | | | | 30 | 9.5 | | | | 20 | | | | 100 |
| Syn.Ex.10 | 0.1 | | 40 | | | | 30 | 29.9 | | | | | | | | 100 |
| Syn.Ex.11 | 4 | | 40 | | | | 30 | 26 | | | | | | | | 100 |
| Syn.Ex.12 | 0.5 | | 23 | | | 16.5 | 30 | 30 | | | | | | | | 100 |
| Syn.Ex.13 | 0.5 | | 77 | | | | 5 | 17.5 | | | | | | | | 100 |
| Syn.Ex.14 | 0.5 | | 12 | | | 27.5 | 30 | 30 | | | | | | | | 100 |
| Syn.Ex.15 | 0.5 | | 82 | | | | 8 | 9.5 | | | | | | | | 100 |
| Syn.Ex.16 | 0.5 | | 40 | | | | 30 | 19.5 | | | | | 10 | | | 100 |
| Syn.Ex.17 | 0.5 | | 40 | | | | 30 | 19.5 | | | | | | 10 | | 100 |
| Syn.Ex.18 | | | 40 | | | | 30 | 30 | | | | | | | | 100 |
| Syn.Ex.19 | 0.5 | | | | | 30 | 59.5 | | | | | | | 10 | | 100 |
| Syn.Ex.20 | 0.5 | | 40 | | | | | | | | | | 59.5 | | | 100 |
| Syn.Ex.21 | 0.5 | | 35 | 5 | | | 59.5 | | | | | | | | | 100 |
| Syn.Ex.22 | 0.5 | | 35 | 5 | | | 39.5 | 15 | | | | 5 | | | | 100 |
| Syn.Ex.23 | 0.5 | | | | | | 30 | 29.5 | | | | 30 | | | 10 | 100 |
| Syn.Ex.24 | 0.5 | | 40 | | | | 30 | 19.5 | | | | 10 | | | | 100 |
| Syn.Ex.25 | 0.5 | | 35 | 5 | | | 49.5 | 7.5 | | | | 2.5 | | | | 100 |

DAP: Diallyl phthalate    BA: Butyl acrylate
DVB: Divinylbenzene    2EHA: 2-Ethylhexyl acrylate
MAA: Methacrylic acid    LMA: Lauryl methacrylate
AA: Acrylic acid    CHMA: Cyclohexyl methacrylate
IA: Itaconic acid    ST: Styrene
MMA: Methyl methacrylate    iso-SMA: Isostearyl methacrylate
EA: Ethyl acrylate    2-MTA: 2-Methoxyethyl acrylate
    Aam: Acrylamide

[Table 1] (Continued)

| Synthesis Example | Acid value mgKOH/g | Tg℃ | Volume average particle size nm | Viscosity mPa·s | SP value $(J/cm^3)_{1/2}$ | Surface tension mN/m |
|---|---|---|---|---|---|---|
| Syn.Ex.1 | 265 | 9 | 110 | 3-4 | 5.6 | 27 |
| Syn.Ex.2 | 267 | 9 | 120 | 3-4 | 5.6 | 27 |
| Syn.Ex.3 | 275 | 8 | 105 | 3-4 | 5.6 | 27 |
| Syn.Ex.4 | 242 | 14 | 155 | 3-4 | 5.7 | 32 |
| Syn.Ex.5 | 263 | 44 | 85 | 3-4 | 5.5 | 28 |
| Syn.Ex.6 | 259 | 50 | 90 | 3-4 | 5.6 | 28 |
| Syn.Ex.7 | 269 | 7 | 78 | 3-4 | 5.6 | 28 |
| Syn.Ex.8 | 271 | 22 | 80 | 3-4 | 5.6 | 28 |
| Syn.Ex.9 | 253 | 42 | 65 | 3-4 | 5.5 | 28 |
| Syn.Ex.10 | 265 | 8 | 160 | 3-4 | 5.6 | 27 |
| Syn.Ex.11 | 255 | 14 | 132 | 3-4 | 5.6 | 28 |
| Syn.Ex.12 | 142 | 6 | 84 | 3-4 | 5.3 | 27 |
| Syn.Ex.13 | 498 | 69 | 170 | 3-4 | 6.1 | 29 |
| Syn.Ex.14 | 75 | 5 | 102 | 3-4 | 5.0 | 27 |
| Syn.Ex.15 | 540 | 84 | 192 | 3-4 | 6.1 | 29 |
| Syn.Ex.16 | 254 | 20 | 95 | 3-4 | 5.6 | 28 |
| Syn.Ex.17 | 275 | 10 | 176 | 3-4 | 5.6 | 28 |
| Syn.Ex.18 | 265 | 8 | 240 | 3-4 | 5.6 | 27 |
| Syn.Ex.19 | n.d. | 3 | 106 | 3-4 | 4.9 | 26 |
| Syn.Ex.20 | 257 | 70 | 70 | 3-4 | 5.8 | 30 |
| Syn.Ex.21 | 265 | 24 | 70 | 3-4 | 5.8 | 27 |
| Syn.Ex.22 | 267 | 23 | 70 | 3-4 | 5.6 | 28 |
| Syn.Ex.23 | n.d. | 5 | 120 | 3-4 | 5.6 | 37 |
| Syn.Ex.24 | 261 | 25 | 70 | 3-4 | 5.5 | 28 |
| Syn.Ex.25 | 267 | 22 | 80 | 3-4 | 5.6 | 27 |

n.d.: Meaning equal to or less than detection limit

[Table 2]

| | Emulsion used in coating agent for forming ink image-receiving layer | White streaks/ white spots | Dryability | Water resistance |
|---|---|---|---|---|
| Ex.1 | Syn.Ex.1 | ○ | ○ | ○ |
| Com.Ex.1 | Syn.Ex.18 | ○ | ○ | × |

(continued)

| | Emulsion used in coating agent for forming ink image-receiving layer | White streaks/ white spots | Dryability | Water resistance |
|---|---|---|---|---|
| Com:Ex.2 | Syn.Ex.19 | × | × | ○ |
| Com.Ex.3 | Syn.Ex.20 | × | × | ○ |
| Com.Ex.4 | Syn.Ex.23 | × | Δ | ○ |
| Ex.2 | Syn.Ex.2 | ○ | ○ | ○ |
| Ex.3 | Syn.Ex.3 | ○ | ○ | ○ |
| Ex.4 | Syn.Ex.4 | ○ | ○ | Δ |
| Ex.5 | Syn.Ex.5 | ○ | ○ | ○ |
| Ex.6 | Syn.Ex.6 | ○ | ○ | ○ |
| Ex.7 | Syn.Ex.7 | ○ | ○ | ○ |
| Ex.8 | Syn.Ex.8 | ○ | ○ | ○ |
| Ex.9 | Syn.Ex.9 | ○ | ○ | ◎ |
| Ex.10 | Syn.Ex.10 | ○ | ○ | Δ |
| Ex.11 | Syn.Ex.11 | ○ | ○ | ○ |
| Ex.12 | Syn.Ex.12 | ○ | ○ | ○ |
| Ex.13 | Syn.Ex.13 | ○ | ○ | Δ |
| Ex.14 | Syn.Ex.14 | Δ | ○ | ○ |
| Ex.15 | Syn.Ex.15 | ○ | ○ | Δ |
| Ex.16 | Syn.Ex.16 | ○ | ○ | ○ |
| Ex.17 | Syn.Ex.17 | ○ | ○ | Δ |
| Ex.18 | Syn.Ex.4/Syn.Ex.9/Syn.Ex.17 = 50/45/5 | ◎ | ○ | ◎ |
| Ex.19 | Syn.Ex.21/Syn.Ex.22 =50/50 | ◎ | ○ | ◎ |
| Ex.20 | Syn.Ex.21/Syn.Ex.22 =60/40 | ◎ | ○ | ◎ |
| Ex.21 | Syn.Ex.24 | ○ | ○ | ◎ |
| Ex.22 | Syn.Ex.21 | ○ | ○ | ○ |
| Ex.23 | Syn.Ex.22 | ○ | ○ | ◎ |
| Ex.24 | Syn.Ex.25 | ○ | ○ | ◎ |

As presented in Table 2, in the coating agents for forming an ink image-receiving layer of the invention of Examples 1 to 24, there is almost no occurrence of white streaks/white spots, and dryability and water resistance are excellent.

Among them, in the coating agents for forming an ink image-receiving layer of Examples 9, 18 to 21, 23 and 24, which use monomers having aromatic groups as the monomer (C), water resistance is very excellent.

Furthermore, among these, according to Examples 18 to 20 in which an emulsion using an aromatic monomer as the monomer (C) and an emulsion using only a monomer other than aromatic compounds as the monomer (C), the coating agents are very excellent in the white streaks/white spots test.

On the contrary, in the coating agent for forming an ink image-receiving layer of Comparative Example 1 in which the monomer (A) is not used, water resistance is very poor.

Furthermore, in the coating agents for forming an ink image-receiving layer of Comparative Examples 2 and 4 which do not use the monomer (B), white streaks/white spots heavily occur.

Furthermore, in the coating agent for forming an ink image-receiving layer of Comparative Example 3 which does not use the monomer (C), white streaks/white spots heavily occur, and dryability is poor.

**Claims**

1. A coating agent for use in forming an inkjet ink-receiving layer, comprising a crosslinked vinyl emulsion including water or water containing a hydrophilic organic solvent; and a resin particle formed by emulsion polymerization of a monomer mixture containing:

   (A) a monomer having two or more ethylenically unsaturated groups;
   (B) a monomer of ethylenically unsaturated carboxylic acid or anhydride or salt thereof having one ethylenically unsaturated group; and
   (C) a monomer having a hydrophobic group having 1 to 12 carbon atoms and one ethylenically unsaturated group.

2. The coating agent for forming an inkjet ink-receiving layer according to claim 1, wherein the proportion of the monomer (A) is 0.1% to 5% by weight and the proportion of the monomer (B) is 20% to 80% by weight, relative to 100% by weight of the total amount of the monomers supplied to emulsion polymerization.

3. The coating agent for forming an inkjet ink-receiving layer according to claim 1 or 2, wherein the acid value of the resin particles of the crosslinked vinyl emulsion is 100 to 500 mg KOH/g.

4. The coating agent for forming an inkjet ink-receiving layer according to any one of claims 1 to 3, wherein the glass transition temperature of the resin particles of the crosslinked vinyl emulsion is 0°C to 100°C.

5. The coating agent for forming an inkjet ink-receiving layer according to any one of claims 1 to 4, wherein the mean volume diameter of the resin particles of the crosslinked vinyl emulsion is 10 to 500 nm.

6. The coating agent for forming an inkjet ink-receiving layer according to any one of claims 1 to 5, wherein the viscosity of the crosslinked vinyl emulsion at a solids concentration of 10% by weight is 0.1 to 300 mPa·s.

7. The coating agent for forming an inkjet ink-receiving layer according to any one of claims 1 to 6, wherein the monomers supplied to emulsion polymerization do not comprise an ethylenically unsaturated monomer having a cationic functional group.

8. The coating agent for forming an inkjet ink-receiving layer according to any one of claims 1 to 7, wherein the SP value according to Fedor's method of the resin particles of the crosslinked vinyl emulsion is 3.9 to 6.8 $(J \cdot cm^{-3})^{1/2}$, and the surface tension according to the Macleod-Sugden method of the resin particles of the crosslinked vinyl emulsion is $22 \times 10^{-3}$ to $35 \times 10^{-3}$ (N/m).

9. A recording medium for forming an image, comprising an inkjet ink-receiving layer formed from the coating agent for forming an inkjet ink-receiving layer according to any one of claims 1 to 8, provided on at least one surface of a base material.

10. A printed matter comprising an image formed with an inkjet ink on the recording medium for forming an image according to claim 9.

11. The printed matter according to claim 10, wherein the inkjet ink contains a pigment dispersing resin, and the pigment dispersing resin is a copolymer made from two components of:

    an aromatic ethylenically unsaturated monomer (m1); and
    at least one monomer (m2) selected from the group consisting of a carboxyl group-containing ethylenically unsaturated monomer, a neutralization product or metal salt thereof, and an acid anhydride group-containing ethylenically unsaturated monomer or a half-ester thereof.

12. A method for producing a printed matter, the method comprising:

    a first step of forming an inkjet ink-receiving layer using a coating agent for forming an inkjet ink-receiving layer including the crosslinked vinyl emulsion formed by emulsion polymerization of a monomer mixture containing

(A) a monomer having two or more ethylenically unsaturated group, (B) a monomer of ethylenically unsaturated carboxylic acid or anhydride or salt thereof having one ethylenically unsaturated group, and (C) a monomer having a hydrophobic group having 1 to 12 carbon atoms and one ethylenically unsaturated group, provided on at least one surface of a base material; and

a second step of forming an image using an inkjet ink on the inkjet ink-receiving layer.

13. The method for producing a printed matter according to claim 12, wherein the inkjet ink comprises a pigment dispersing resin, and the pigment dispersing resin is a copolymer made from two components of:

an aromatic ethylenically unsaturated monomer (m1); and

at least one monomer (m2) selected from the group consisting of a carboxyl group-containing ethylenically unsaturated monomer, a neutralization product or metal salt thereof, and an acid anhydride group-containing ethylenically unsaturated monomer or a half-ester thereof.

**Patentansprüche**

1. Beschichtungsmittel zur Verwendung zur Bildung einer Tintenstrahl-Tinten-Aufnahmeschicht, welches umfaßt: eine vernetzte Vinyl-Emulsion, die Wasser oder Wasser, das ein hydrophiles organisches Lösungsmittel enthält, einschließt; und ein Harzteilchen, das gebildet wird durch Emulsions-Polymerisation einer Monomermischung, die enthält:

(A) ein Monomer, das zwei oder mehr ethylenisch ungesättigte Gruppen aufweist;
(B) ein Monomer einer ethylenisch ungesättigten Carbonsäure oder eines Anhydrids oder eines Salzes davon, die/das eine ethylenisch ungesättigte Gruppe aufweist; und
(C) ein Monomer, das eine hydrophobe Gruppe, die 1 bis 12 Kohlenstoffatome aufweist, und eine ethylenisch ungesättigte Gruppe aufweist.

2. Beschichtungsmittel zur Bildung einer Tintenstrahl-Tinten-Aufnahmeschicht nach Anspruch 1, worin der Anteil des Monomers (A) 0,1 Gew.-% bis 5 Gew.-% und der Anteil des Monomers (B) 20 Gew.-% bis 80 Gew.-% ist, bezogen auf 100 Gew.-% der Gesamtmenge des Monomers, das der Emulsions-Polymerisation zugeführt wird.

3. Beschichtungsmittel zur Bildung einer Tintenstrahl-Tinten-Aufnahmeschicht nach Anspruch 1 oder 2, worin der Säurewert der Harzteilchen der vernetzten Vinyl-Emulsion 100 bis 500 mg KOH/g ist.

4. Beschichtungsmittel zur Bildung einer Tintenstrahl-Tinten-Aufnahmeschicht nach einem der Ansprüche 1 bis 3, worin die Glasübergangs-Temperatur der Harzteilchen der vernetzten Vinyl-Emulsion 0 °C bis 100 °C ist.

5. Beschichtungsmittel zur Bildung einer Tintenstrahl-Tinten-Aufnahmeschicht nach einem der Ansprüche 1 bis 4, worin der mittlere Volumendurchmesser der Harzteilchen der vernetzten Vinyl-Emulsion 10 bis 500 nm ist.

6. Beschichtungsmittel zur Bildung einer Tintenstrahl-Tinten-Aufnahmeschicht nach einem der Ansprüche 1 bis 5, worin die Viskosität der vernetzten Vinyl-Emulsion bei einer Feststoffkonzentration von 10 Gew.-% 0,1 bis 300 mPa·s ist.

7. Beschichtungsmittel zur Bildung einer Tintenstrahl-Tinten-Aufnahmeschicht nach einem der Ansprüche 1 bis 6, worin die Monomere, die der Emulsions-Polymerisation zugeführt werden, kein ethylenisch ungesättigtes Monomer umfassen, das eine kationische funktionelle Gruppe aufweist.

8. Beschichtungsmittel zur Bildung einer Tintenstrahl-Tinten-Aufnahmeschicht nach einem der Ansprüche 1 bis 7, worin der SP-Wert der Harzteilchen der vernetzten Vinyl-Emulsion nach der Fedor's-Methode 3,9 bis 6,8 $(J \cdot cm^{-3})^{1/2}$ beträgt, und die Oberflächenspannung der Harzteilchen der vernetzten Vinyl-Emulsion nach der Macleod-Sugden-Methode $22 \times 10^{-3}$ bis $35 \times 10^{-3}$ (N/m) beträgt.

9. Aufzeichnungsmedium zur Bildung eines Bildes, welches eine Tintenstrahl-Tinten-Aufnahmeschicht umfaßt, die hergestellt wird aus dem Beschichtungsmittel zur Bildung einer Tintenstrahl-Tinten-Aufnahmeschicht nach einem der Ansprüche 1 bis 8, die auf wenigstens einer Oberfläche eines Basismaterials vorgesehen ist.

**10.** Drucksache, welche ein Bild umfaßt, das gebildet wird mit einer Tintenstrahl-Tinte auf dem Aufzeichnungsmedium zur Bildung eines Bildes nach Anspruch 9.

**11.** Drucksache nach Anspruch 10, worin die Tintenstrahl-Tinte ein Pigment-dispergierendes Harz enthält, und das Pigment dispergierende Harz ein Copolymer ist, das aus zwei Bestandteilen hergestellt wird:

einem aromatischen ethylenisch ungesättigten Monomer (m1); und wenigstens einem Monomer (m2), das ausgewählt ist aus der Gruppe, die besteht aus einem Carboxylgruppe enthaltenden, ethylenisch ungesättigten Monomer, einem Neutralisationsprodukt oder Metallsalz davon und einem Säureanhydrid-Gruppe enthaltenden ethylenisch ungesättigten Monomer oder einem Halbester davon.

**12.** Verfahren zur Herstellung einer Drucksache, wobei das Verfahren umfaßt:

einen ersten Schritt zur Bildung einer Tintenstrahl-Tinten-Aufnahmeschicht unter Verwendung eines Beschichtungsmittels zur Bildung einer Tintenstrahl-Tinten-Aufnahmeschicht, welche die vernetzte Vinyl-Emulsion einschließt, die durch Emulsions-Polymerisation einer Monomermischung gebildet wird, die enthält: (A) ein Monomer, das zwei oder mehr ethylenisch ungesättigte Gruppen ausweist; (B) ein Monomer einer ethylenisch ungesättigten Carbonsäure oder eines Anhydrids oder eines Salzes davon, die/das eine ethylenisch ungesättigte Gruppe aufweist; und (C) ein Monomer, das eine hydrophobe Gruppe, die 1 bis 12 Kohlenstoffatome aufweist, und eine ethylenisch ungesättigte Gruppe aufweist, die auf wenigstens einer Oberfläche eines Basismaterials vorgesehen ist; und einen zweiten Schritt zur Bildung eines Bildes unter Verwendung einer Tintenstrahl-Tinte auf der Tintenstrahl-Tinten-Aufnahmeschicht.

**13.** Verfahren zur Herstellung einer Drucksache nach Anspruch 12, worin die Tintenstrahl-Tinte ein Pigment-dispergierendes Harz umfaßt, und das Pigment dispergierende Harz ein Copolymer ist, das aus zwei Bestandteilen hergestellt wird:

einem aromatischen ethylenisch ungesättigten Monomer (m1); und wenigstens einem Monomer (m2), das ausgewählt ist aus der Gruppe, die besteht aus einem Carboxylgruppe enthaltenden, ethylenisch ungesättigten Monomer, einem Neutralisationsprodukt oder Metallsalz davon und einem Säureanhydrid-Gruppe enthaltenden ethylenisch ungesättigten Monomer oder einem Halbester davon.

**Revendications**

**1.** Agent de couchage destiné à une utilisation dans la formation d'une couche de réception d'encre pour imprimante à jet d'encre, comprenant une émulsion vinylique réticulée contenant de l'eau ou de l'eau contenant un solvant organique hydrophile, et d'une particule de résine formée par polymérisation en émulsion d'un mélange monomère contenant :

(A) un monomère possédant deux ou plus groupes éthyléniquement insaturés,
(B) un monomère d'un acide ou d'un anhydride carboxylique éthyléniquement insaturé ou d'un sel de celui-ci possédant un groupe éthyléniquement insaturé, et
(C) un monomère possédant un groupe hydrophobe possédant de 1 à 12 atomes de carbone et un groupe éthyléniquement insaturé.

**2.** Agent de couchage destiné à la formation d'une couche de réception d'encre pour imprimante à jet d'encre selon la revendication 1, dans lequel la proportion du monomère (A) est de 0,1% à 5% en poids et la proportion du monomère (B) est de 20% à 80% en poids, par rapport à 100% en poids de la quantité totale des monomères fournis à polymérisation en émulsion.

**3.** Agent de couchage destiné à la formation d'une couche de réception d'encre pour imprimante à jet d'encre selon la revendication 1 ou 2, dans lequel l'indice d'acidité des particules de résine de l'émulsion vinylique réticulée est de 100 à 500 mg KOH/g.

**4.** Agent de couchage destiné à la formation d'une couche de réception d'encre pour imprimante à jet d'encre selon l'une quelconque des revendications 1 à 3, dans lequel la température de transition vitreuse de particules de résine de l'émulsion vinylique réticulée est de 0°C à 100°C.

**5.** Agent de couchage destiné à la formation d'une couche de réception d'encre pour imprimante à jet d'encre selon l'une quelconque des revendications 1 à 4, dans lequel le diamètre de volume moyen de particules de résine de l'émulsion vinylique réticulée est de 10 à 500 nm.

**6.** Agent de couchage destiné à la formation d'une couche de réception d'encre pour imprimante à jet d'encre selon l'une quelconque des revendications 1 à 5, dans lequel la viscosité de l'émulsion vinylique réticulée à une concentration en solides de 10% en poids est de 0,1 à 300 mPa·s.

**7.** Agent de couchage destiné à la formation d'une couche de réception d'encre pour imprimante à jet d'encre selon l'une quelconque des revendications 1 à 6, dans lequel les monomères fournis à polymérisation en émulsion ne contiennent pas un monomère éthyléniquement insaturé possédant un groupe fonctionnel cationique.

**8.** Agent de couchage destiné à la formation d'une couche de réception d'encre pour imprimante à jet d'encre selon l'une quelconque des revendications 1 à 7, dans lequel la valeur SP selon le procédé de Fedor des particules de résine de l'émulsion vinylique réticulée est de 3,9 à 6,8 $(J \cdot cm^{-3})^{1/2}$, et la tension de surface selon le procédé de Macleod-Sugden des particules de résine de l'émulsion vinylique réticulée est de $22 \times 10^{-3}$ à $35 \times 10^{-3}$ (N/m).

**9.** Support d'enregistrement destiné à la formation d'une image comprenant une couche de réception d'encre pour imprimante à jet d'encre formée à partir de l'agent de couchage pour la formation d'une image comprenant une couche de réception d'encre pour imprimante à jet d'encre selon l'une quelconque des revendications 1 à 8, fournie sur au moins une surface d'un matériau de base.

**10.** Produit imprimé comprenant une image formée avec une encre pour imprimante à jet d'encre sur le support d'enregistrement destiné à la formation d'une image selon la revendication 9.

**11.** Produit imprimé selon la revendication 10, dans lequel l'encre pour imprimante à jet d'encre contient une résine de dispersion de pigments, et la résine de dispersion de pigments est un copolymère composé de deux composants parmi :

un monomère éthyléniquement insaturé aromatique (m1), et
au moins un monomère (m2) sélectionné dans le groupe constitué d'un monomère insaturé contenant un groupe carboxyle, d'un produit de neutralisation ou d'un sel métallique de celui-ci, et d'un monomère éthyléniquement insaturé contenant un groupe anhydride acide ou d'un demiester de celui-ci.

**12.** Procédé de production d'un produit imprimé, le procédé comprenant :

une première étape de formation d'une couche de réception d'encre pour imprimante à jet d'encre au moyen d'un agent de couchage destiné à la formation d'une couche de réception d'encre pour imprimante à jet d'encre contenant l'émulsion vinylique réticulée formée par polymérisation en émulsion d'un mélange monomère contenant : (A) un monomère possédant deux ou plus groupes éthyléniquement insaturés, (B) un monomère d'un acide ou d'un anhydride carboxylique éthyléniquement insaturé ou d'un sel de celui-ci possédant un groupe éthyléniquement insaturé, et (C) un monomère possédant un groupe hydrophobe possédant de 1 à 12 atomes de carbone et un groupe éthyléniquement insaturé, fournie sur au moins une surface d'un matériau de base, et une deuxième étape de formation d'une image au moyen d'une encre pour imprimante à jet d'encre sur la couche de réception d'encre pour imprimante à jet d'encre.

**13.** Procédé de production d'un produit imprimé selon la revendication 12, dans lequel l'encre pour imprimante à jet d'encre contient une résine de dispersion de pigments, et la résine de dispersion de pigments est un copolymère composé de deux composants parmi :

un monomère éthyléniquement insaturé aromatique (m1), et
au moins un monomère (m2) sélectionné dans le groupe constitué d'un monomère éthyléniquement insaturé contenant un groupe carboxyle, d'un produit de neutralisation ou d'un sel métallique de celui-ci, et d'un monomère éthyléniquement insaturé contenant un groupe anhydride acide ou d'un demiester de celui-ci.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009214318 A
- EP 1502929 A1
- EP 1424374 A1
- US 20080022839 A1
- JP 2009161885 A
- JP 3854165 B
- JP 2001232932 A
- JP 3721651 B
- JP 3950688 B
- JP 2010015176 A

**Non-patent literature cited in the description**

- **T.G. FOX.** *Phys. Rev.,* 1952, vol. 86, 652
- **R.F. FEDOR.** *Polym. Eng. Sci.,* 1974, vol. 14 (2), 147
- **R. F. FEDOR.** *Polym. Eng. Sci.,* 1974, vol. 14 (2), 147
- **MACLEAD.** *Trans, Faraday Soc.,* 1923, vol. 19, 38